# EUROPEAN PATENT APPLICATION

(11) **EP 4 801 002 A1**
(43) Date of publication of application: **02.09.2026**
(21) Application number: 26152825.1
(22) Date of filing: 20.01.2026
(51) Int. Cl.: H04L 45/02, H04L 45/021, H04L 45/24, H04L 45/28

(54) **FAST DETECTION OF A NODE FAILURE IN A DISTRIBUTED SCHEDULED FABRIC**

(30) Priority: 26.02.2025 US 202519064237
(71) Applicant: Arista Networks, Inc., Santa Clara, CA 95054 (US)
(72) Inventor: SINGH, Yashvir, Santa Clara, California, 95054 (US); KUMAR EERPINI, Satish, Santa Clara, California, 95054 (US); GAHLOT, Digvijay Singh, Santa Clara, California, 95054 (US); GUPTA, Rajnish, Santa Clara, California, 95054 (US); LABONTE, Francois, Santa Clara, California, 95054 (US)
(74) Representative: Hoffmann Eitle

(57) **Abstract**

The present disclosure is directed to detection of downed leaf devices in a distributed schedule fabric (DSF). In accordance with some embodiments, keep alive messages are exchanged among the leaf devices in the spine-leaf network. In some embodiments, the keep alive messages are sent periodically so that when a first leaf device does not see a keep alive message from another second leaf device after a certain period of time, the first leaf device can consider that the second leaf device is down or otherwise not reachable. Each leaf device can include a reachability table to keep track of which leaf devices are reachable and which are not reachable. If a leaf device is not reachable, the packet can be dropped, otherwise the packet can be further processed and forwarded to the next hop.

## Description

### BACKGROUND

The present disclosure is directed to a distributed scheduled fabric (DSF) to provide communication between hosts connected to the DSF. The DSF comprises a cluster of devices referred to as leaf devices (nodes) and spine devices (nodes). The cluster of leaf devices are connected to each other via spine devices. Hosts connect to the leaf devices. To provide communication between hosts attached to different leaf devices, routes are installed on leaf devices which point to hosts connected to other leaf devices.

### BRIEF DESCRIPTION OF THE DRAWINGS

With respect to the discussion to follow and in particular to the drawings, it is stressed that the particulars shown represent examples for purposes of illustrative discussion, and are presented in the cause of providing a description of principles and conceptual aspects of the present disclosure. In this regard, no attempt is made to show implementation details beyond what is needed for a fundamental understanding of the present disclosure. The discussion to follow, in conjunction with the drawings, makes apparent to those of skill in the art how embodiments in accordance with the present disclosure may be practiced. Similar or same reference numbers may be used to identify or otherwise refer to similar or same elements in the various drawings and supporting descriptions. In the accompanying drawings:
FIG. 1 is an example high-level network diagram in accordance with the present disclosure.
FIG. 2 shows details of a leaf device in some embodiments.
FIG. 3 shows additional details of data tables in some embodiments.
FIGs. 4, 5, and 6 show example flows in accordance with the present disclosure.
FIG.7 shows an example sequence for processing packets in accordance with the present disclosure.
FIG. 8 shows an example of a network (leaf) device.

### DETAILED DESCRIPTION

The present disclosure is directed to detecting downed or otherwise unreachable leaf devices in a distributed scheduled fabric (DSF). Early detection of downed leaf devices improves performance in active leaf devices by avoiding the processing and forwarding of packets to the downed leaf devices only for those packets to be dropped in transit. Early detection of downed leaf devices can also reduce network traffic congestion by not transmitting packets to downed leaf devices to begin with.

In accordance with some embodiments, heartbeat messages can be exchanged among the leaf devices in the spine-leaf network. In some embodiments, for example, the BFD (Bidirectional Forwarding Detection) protocol can be used to exchange heartbeat messages among the leaf devices. In other embodiments, the leaf devices can send heartbeat messages to an intermediary device; for example, a central controller or the spine devices themselves.

The heartbeat messages can be sent periodically so that when a (first) leaf device does not see a heartbeat message from another (second) leaf device after a certain period of time, the first leaf device can consider that the second leaf device is down or otherwise unreachable. In the case of an intermediary, the intermediary can broadcast a message to the leaf devices indicating that a given leaf device is unreachable when the given leaf device has not transmitted a heartbeat message to the intermediary within a certain period of time.

In some embodiments, each leaf device can include a reachability table to keep track of which leaf devices are reachable and which are not reachable. When a packet arrives with a given destination IP address, a route lookup on the DIP (e.g., via a FIB) can produce information that identifies a next hop device and a port on that device. The reachability table can be used to look up the leaf device using the next hop ID. If the leaf device is not reachable, the packet can be dropped; otherwise the packet can be further processed and forwarded to the next hop.

In some embodiments, routes associated with an unreachable leaf device can be withdrawn. For example, the routes can be removed from the FIB in response to determining that a leaf device has become unreachable. In such embodiments, a reachability table would not be needed because the route lookup can immediately fail and the packet can be treated accordingly; e.g., dropped.

In some embodiments, when a packet is dropped because its next hop is not reachable, the network device can flag an error that can be reported to a network administrator.

In some embodiments, if the unreachable leaf device is a member of an ECMP group, a LAG group, or other aggregation group, the ports in that leaf device can be removed from the group which would reduce the amount of packet loss.

In the following description, for purposes of explanation, numerous examples and specific details are set forth in order to provide a thorough understanding of embodiments of the present disclosure. Particular embodiments as expressed in the claims may include some or all of the features in these examples, alone or in combination with other features described below, and may further include modifications and equivalents of the features and concepts described herein.

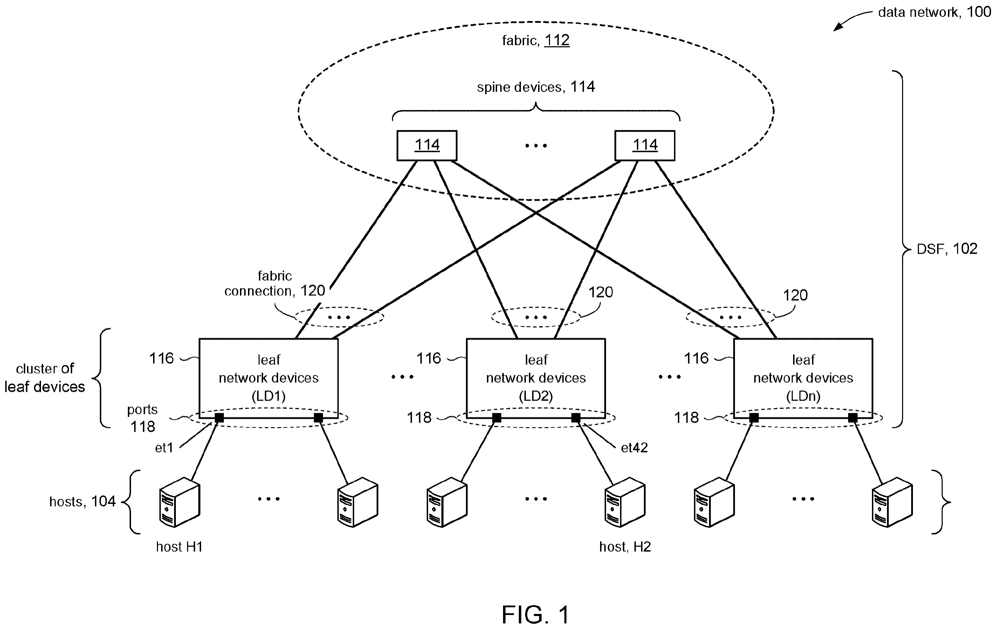

FIG.1 is a high-level diagram illustrating a data network that can embody the techniques in accordance with the present disclosure. In some embodiments, for example, data network 100 comprises a distributed scheduled fabric (DSF) 102 to provide communication among hosts 104. It will be appreciated that a DSF can be based on any suitable network topology. DSF 102, for example, employs a network topology commonly referred to as a spine-leaf architecture. DSF 102 includes a fabric 112 comprising spine devices (nodes) 114, and a cluster of leaf network devices (leaf nodes) 116 interconnected by spine devices 114 via fabric connections 120. An example of a DSF is the 7700R4 Distributed Etherlink Switch^{™} switching system developed and sold by Arista Networks, Inc. of Santa Clara, California.

Hosts 104 connect to physical ports 118 on leaf devices 116; e.g., the example in FIG. 1 shows host H1 connected to an interface configured on a physical port on leaf device LD1 and identified as et1. Likewise, host H2 is connected to an interface configured on a physical port on leaf device LD2 and identified as et42. Each of the ports 118 among the leaf devices 116 can be globally uniquely identified across the cluster of leaf devices; e.g., identifier "et1" is unique across all interfaces on all leaf devices 116.

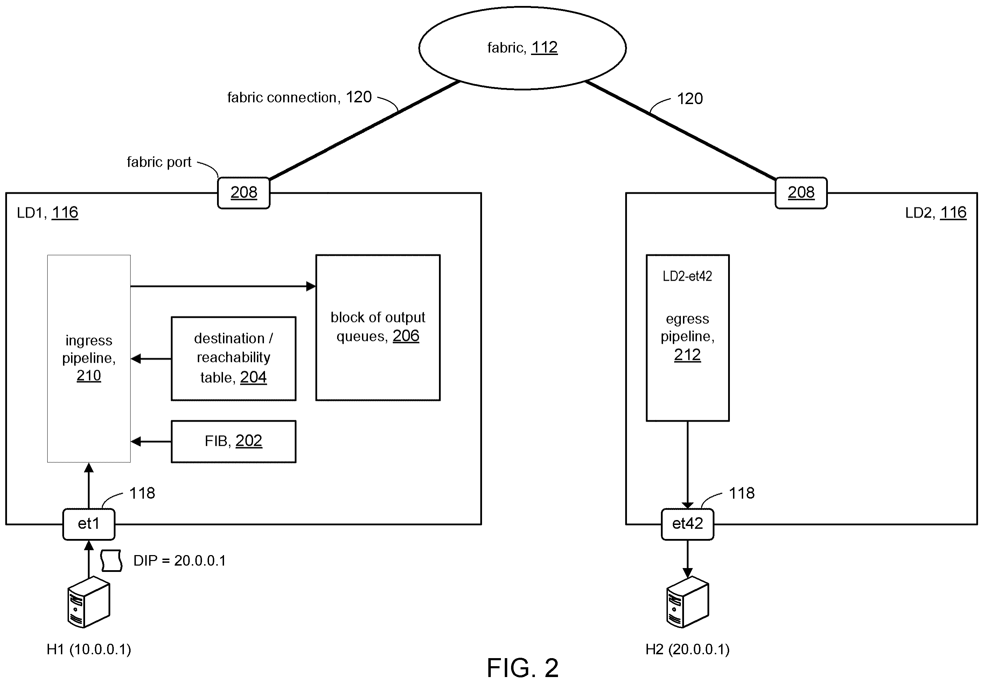

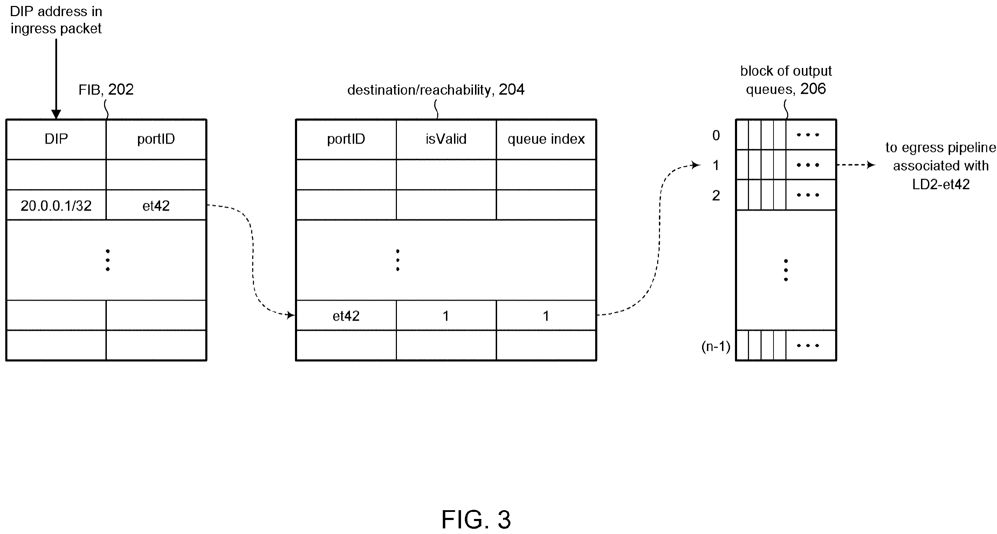

Referring to FIG. 2, each leaf device 116 includes a fabric port 208 for connecting to fabric 112. Each leaf device 116 further includes data objects for processing and forwarding packets, including a forwarding information base (FIB) 202, a destination / reachability table 204, and a block of output queues 206. Additional details of these data objects are discussed in connection with FIG. 3. In order to reduce clutter in the figure, FIB 202, destination / reachability table 204, and output queues 206 are only shown in leaf device LD1, with the understanding that each leaf device includes a corresponding FIB, destination / reachability table, and output queues.

Each port 118 on each leaf device 116 includes a corresponding ingress pipeline and a corresponding egress pipeline. In order to reduce clutter in the figure, FIG. 2 only shows ingress pipeline 210 corresponding to interface et1 on leaf device LD1 and egress pipeline 212 corresponding to interface et42 on leaf device LD2. Operation of the ingress and egress pipelines is known. Briefly, packets that ingress on a port are initially processed by the ingress pipeline associated with that port. The ingress pipeline performs a lookup to determine the (egress) port on which the packet will egress, and enqueues the packet on the egress pipeline that corresponds to that port. If the egress port is on a leaf device other than the leaf device on which the packet ingressed, the packet will be transmitted to that other leaf device via fabric 112. FIG. 2 illustrates this use case, where LD1 receives a packet from host H1 (ingress port et1 is on LD1) that is destined to host H2 on LD2 (egress port et42 is on LD2).

Referring to FIG. 3, FIB 202 provides a mapping between the destination IP (DIP) address contained in an ingress packet and an identifier of the port 118 (portID) on which the destination host is connected. In accordance with the present disclosure, destination / reachability table 204 associates a portID with a port valid indicator (isValid) and a queue index. Output queues 206 is a block of output queues. Each output queue 206 corresponds to an egress pipeline in a leaf device, noting that the egress pipeline can be on the same leaf device or a different leaf device. FIG. 3 illustrates an example with an ingress packet having a DIP address of 20.0.0.1. FIB 202 maps the DIP address to port ID et42 for egress. The portID is used to access an entry in destination / reachability table 204. The accessed entry includes a queue index of '1' which points to an output queue in the block of output queues 206. The isValid parameter in the destination / reachability table is discussed below.

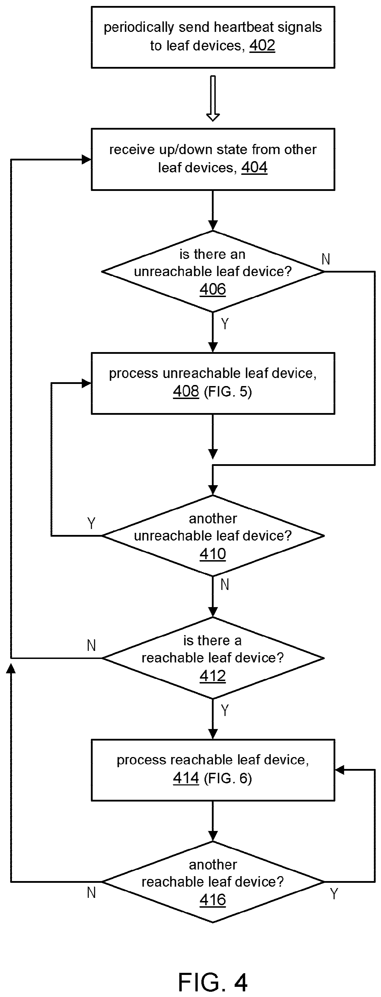

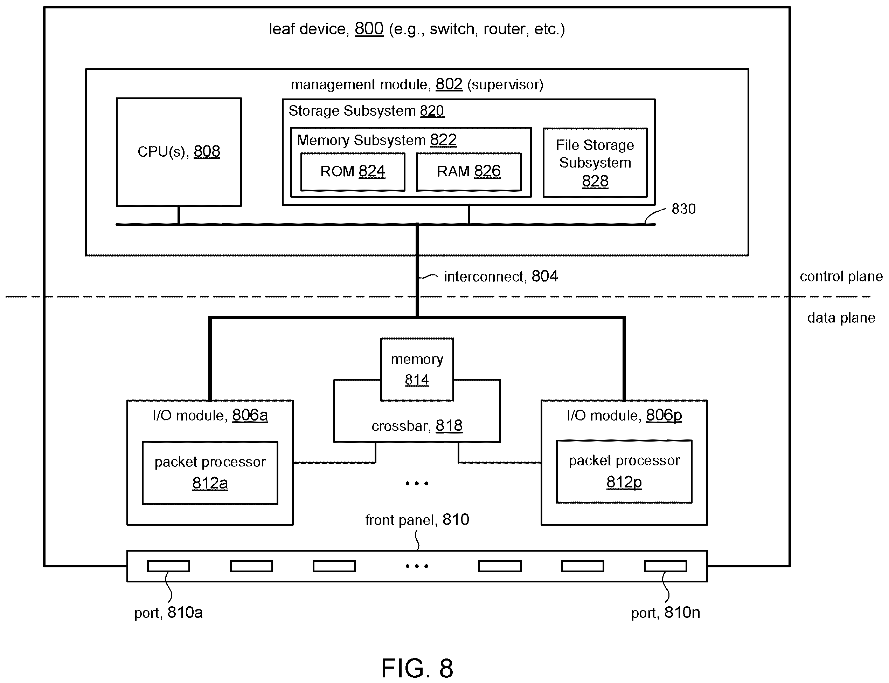

Referring to FIG. 4 and other figures, the discussion will now turn to a high level description of operations and processing in each leaf device (e.g., 116, FIG. 1) among the cluster of leaf devices in a DSF (e.g., 102) in accordance with the present disclosure. In some embodiments, for example, the leaf device 116 can include computer executable program code (e.g., stored on a non-transitory computer-readable storage memory device), which when executed by a processor (e.g., 812, FIG.8), can cause the leaf device to perform processing in accordance with FIG. 4. The operation and processing blocks described below are not necessarily executed in the order shown. Some operations may occur concurrently. Operations can be combined or broken out into smaller operations in various embodiments. Operations can be allocated for execution among one or more concurrently executing processes and/or threads. The flow of operations performed by the processor is not necessarily limited to the order of operations shown.

At operation 402, the leaf device can send periodic heartbeat signals to each other; e.g., a heartbeat signal can be sent every few seconds or so. In some embodiments, for example, the leaf device can send a heartbeat signal to the fabric (e.g., 112, FIG. 1); e.g., to the spine devices (e.g., 114) in the fabric. In other embodiments, the heartbeat signal can be transmitted to a central location (e.g., network controller) other than the fabric. In still other embodiments, the leaf devices may be interconnected by a local data bus (not shown in the figures). Each leaf device can transmit the heartbeat signal directly to every other leaf device over the local data bus.

At operation 404, the leaf device can receive up/down state data associated with the other leaf devices. In some embodiments, for example, where leaf devices send heartbeat signals to a central location (e.g., fabric), the central location can use the received heartbeat signals to generate up/down state information for each leaf device. For example, a leaf device that sends a regular stream of heartbeat signals can be deemed to be in the up (reachable) state. A leaf device that stops sending heartbeat signals after a period of time can be deemed to be in the down (unreachable) state. The central location can transmit the up/down state of each leaf device to all the leaf devices. In other embodiments, where each leaf device sends heartbeat signals directly to the other leaf devices, each leaf device itself can determine the up/down state (i.e., the reachability) of the other leaf devices.

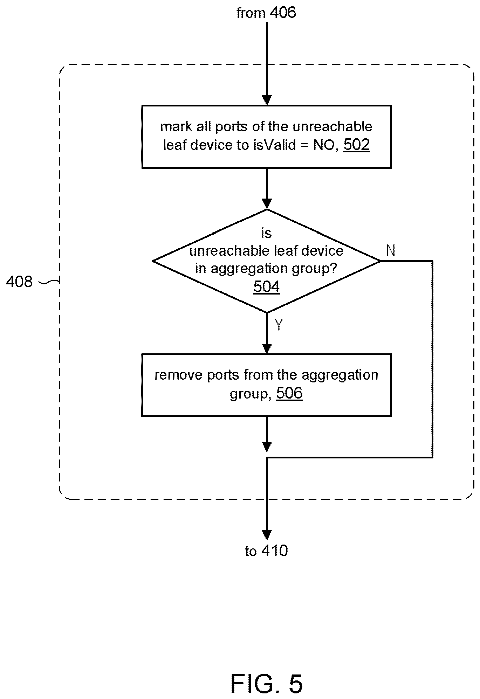

At decision point 406, if the leaf device detects an unreachable leaf device (e.g., based on its up/down state), then processing can continue to operation 408 (described in FIG. 5) to process detection of the unreachable leaf device in accordance with the present disclosure; otherwise, processing can proceed to decision point 410.

At decision point 410, if the leaf device detects another unreachable leaf device, then processing proceeds to operation 408 (described in FIG. 5) to process detection of the unreachable leaf device in accordance with the present disclosure; otherwise, processing can proceed to decision point 412.

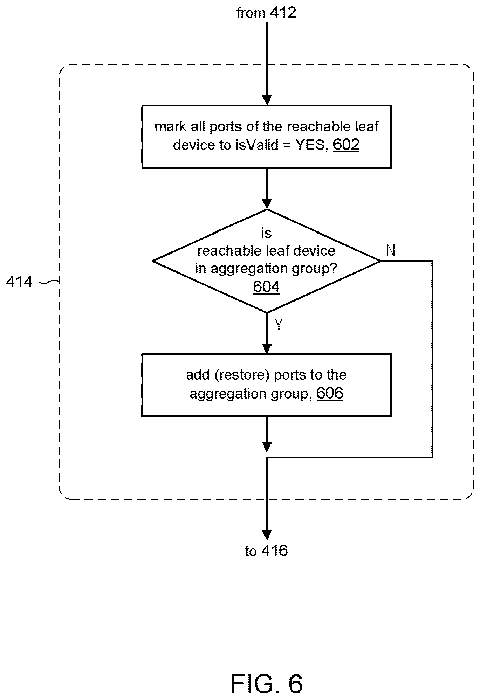

At decision point 412, if the leaf device detects a reachable leaf device, then processing can continue to operation 414 (described in FIG. 6) to process detection of the reachable leaf device in accordance with the present disclosure; otherwise, processing can return to operation 404 to receive and process another cycle of up/down state data.

At decision point 416, if the leaf device detects another reachable leaf device, then processing proceeds to operation 414 (described in FIG. 5) to process detection of the reachable leaf device in accordance with the present disclosure; otherwise, processing can proceed to operation 404 to receive and process another cycle of up/down state data.

Referring to FIG. 5 and other figures, the discussion will now turn to a high level description of operations and processing in each leaf device (e.g., 116, FIG. 1) to process detection of an unreachable leaf device in accordance with the present disclosure. Recall from operation 406 that the flow in FIG. 5 is triggered in response to a given leaf device determining that a leaf device is unreachable.

At operation 502, the given leaf device can set the isValid parameter in the destination / reachability table (e.g., 204, FIG. 3) to '0' (NO), for each port in the unreachable leaf device that is referenced in the table.

At decision point 504, if the unreachable leaf device is in an aggregation group, then processing can proceed to operation 506; otherwise processing can continue with operation 410 (FIG. 4). Aggregation grouping is a technique that combines ports from multiple (two or more) network devices into a single logical connection. Aggregation groups include configurations such as LAG (Link Aggregation Group), MLAG (Multi-Chassis Link Aggregation), ECMP (Equal Cost Multipath), and so on.

At operation 506, the given leaf device can remove ports on the unreachable leaf device from aggregation groups in which the ports are members. As noted above, an aggregation group combines (groups) ports from multiple (two or more) network devices into a single logical connection. When a leaf device is deemed unreachable, ports on the unreachable device are removed from any aggregation groups that contain those ports to reduce packet loss. Processing can continue with operation 410 (FIG. 4).

Referring to FIG. 6 and other figures, the discussion will now turn to a high level description of operations and processing in each leaf device (e.g., 116, FIG. 1) to process detection of a reachable leaf device in accordance with the present disclosure. Recall from operation 412 that the flow in FIG. 6 is triggered in response to a given leaf device determining that a leaf device is reachable.

At operation 602, the given leaf device can set the isValid parameter in the destination / reachability table (e.g., 204, FIG. 3) to '1' (YES), for each port in the reachable leaf device that is referenced in the table. This operation is applicable when the reachable leaf device was previously deemed unreachable but is now deemed reachable. This operation has no effect when the reachable leaf device is already in the reachable state.

At decision point 604, if the reachable leaf device is in an aggregation group (described above in connection with operation 504), then processing can proceed to operation 606; otherwise processing can continue with operation 410 (FIG. 4).

At operation 606, the given leaf device can add ports on the reachable leaf device to aggregation groups in which those ports are members. This operation is applicable when the reachable leaf device was previously deemed unreachable and its ports had been removed from any associated aggregation groups. This operation serves to restore the ports in the associated aggregation groups if they were previously removed. Processing can continue with operation 410 (FIG. 4).

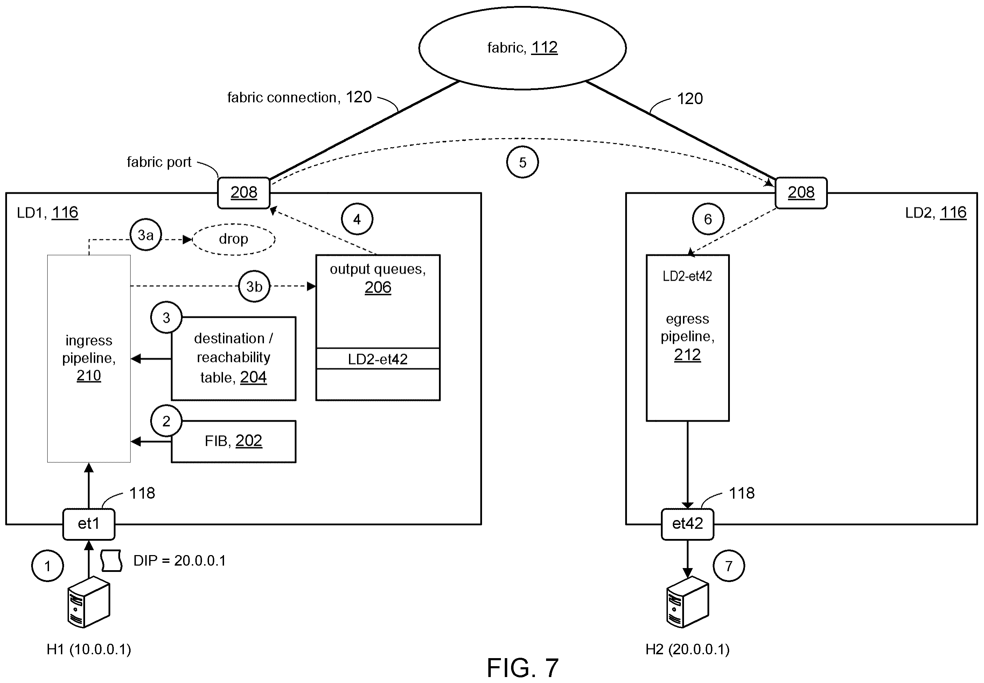

Referring to FIG. 7, an example of processing a packet in accordance with the present disclosure can proceed as follows. The circled numbers in the figure are time indices. The example illustrates processing a packet received from a host on LD1 that is destined to a host on LD2:
- At time index 1, host H1, connected to interface et1 on LD1, transmits a packet having a DIP address 20.0.0.1 destined to host H2 (connected to interface et42 on LD2). The packet is processed in ingress pipeline 210 associated with interface et1.
- At time index 2, a look-up is done in FIB 202. Using the table examples shown in FIG 3, the FIB will map the DIP address of 20.0.0.1 to a portID of et42.
- At time index 3, a lookup is done in destination / reachability table 204 using the portID obtained at time index 2, namely et42, to access an entry in the reachability table. If the isValid parameter in the accessed entry is cleared (e.g., '0'), that means the leaf device containing interface et42 is unreachable, and in accordance with the present disclosure, the packet can be dropped at time index 3a to avoid sending the packet to an unreachable device. Processing the received packet can be deemed complete.
If the is Valid parameter in the accessed entry is set (e.g., '1'), that means the leaf device of interface et42 is reachable and packet processing can continue. Accordingly, at time index 3b, the packet can be enqueued on the output queue in the block of output queues 206 indexed by the queue index parameter of the accessed reachability table entry. It will be appreciated that additional data can be enqueued on the indexed output queue along with the packet. The additional data can be used in the egress pipeline to generate a suitable egress packet.
- At time index 4, because the indexed output queue in our example is associated with an interface, namely et42, that is on another leaf device, the packet will be sent to fabric 112.
- At time index 5, the fabric 112 will send the packet to LD2.
- At time index 6, LD2 enqueues the received packet on the egress pipeline 212 associated with interface et42.
- At time index 7, the packet will be transmitted by interface et42 to host H2.

FIG. 8 is a schematic representation of a network (leaf) device 800 (e.g., a router, switch, firewall, and the like) that can be adapted in accordance with the present disclosure. In some embodiments, for example, network device 800 can include one or more management modules 802, one or more I/O modules (switches, switch chips) 806a - 806p, and a front panel 810 of I/O ports (physical interfaces, I/Fs) 810a - 810n. Management module 802 can constitute the control plane of network device 800 (also referred to as the control layer or simply the central processing unit, CPU), and can include CPU(s) 808 for managing and controlling operation of network device 800 in accordance with the present disclosure. CPU(s) 808 can be a general-purpose processor, such as an Intel^{®}/AMD^{®} x86, ARM^{®} microprocessor and the like, that operates under the control of software stored in a memory device/chips such as read-only memory (ROM) 824 or random-access memory (RAM) 826. The control plane provides services that include traffic management functions such as routing, security, load balancing, analysis, and the like.

CPU(s) 808 can communicate with storage subsystem 820 via bus subsystem 830. Other subsystems, such as a network interface subsystem (not shown in FIG. 8), may be on bus subsystem 830. Storage subsystem 820 can include memory subsystem 822 and file/disk storage subsystem 828. Memory subsystem 822 and file/disk storage subsystem 828 represent examples of non-transitory computer-readable storage devices that can store program code and/or data, which when executed by CPU(s) 808, can cause CPU(s) 808 to perform operations in accordance with embodiments of the present disclosure.

Memory subsystem 822 can include a number of memories such as main RAM 826 (e.g., static RAM, dynamic RAM, etc.) for storage of instructions and data during program execution, and ROM (read-only memory) 824 on which fixed instructions and data can be stored. File storage subsystem 828 can provide persistent (i.e., non-volatile) storage for program and data files, and can include storage technologies such as solid-state drive and/or other types of storage media known in the art.

CPU(s) 808 can run a network operating system stored in storage subsystem 820. A network operating system is a specialized operating system for network device 800. For example, the network operating system can be the Arista EOS^{®} operating system, which is a fully programmable and highly modular, Linux-based network operating system developed and sold/licensed by Arista Networks, Inc. of Santa Clara, California. It is understood that other network operating systems may be used.

Bus subsystem 830 can provide a mechanism for the various components and subsystems of management module 802 to communicate with each other as intended. Although bus subsystem 830 is shown schematically as a single bus, alternative embodiments of the bus subsystem can utilize multiple buses.

The one or more I/O modules 806a - 806p can be collectively referred to as the data plane of network device 800 (also referred to as the data layer, forwarding plane, etc.). Interconnect 804 represents interconnections between modules in the control plane and modules in the data plane. Interconnect 804 can be any suitable bus architecture such as Peripheral Component Interconnect Express (PCIe), System Management Bus (SMBus), Inter-Integrated Circuit (I2C), etc.

I/O modules 806a - 806p can include respective packet processing hardware comprising packet processors 812a - 812p (collectively 812) to provide packet processing and forwarding capability. Each I/O module 806a - 806p can be further configured to communicate over one or more ports 810a - 810n on the front panel 810 to receive and forward network traffic. Packet processors 812 can comprise hardware (circuitry), including for example, data processing hardware such as an application specific integrated circuit (ASIC), field programmable gate array (FPGA), processing unit, and the like, which can be configured to operate in accordance with the present disclosure. Packet processors 812 can include forwarding lookup hardware such as, for example, but not limited to content addressable memory such as ternary CAMs (TCAMs) and auxiliary memory such as static RAM (SRAM).

Memory hardware 814 can include buffers used for queueing packets. I/O modules 806a - 806p can access memory hardware 814 via crossbar 818. It is noted that in other embodiments, the memory hardware 814 can be incorporated into each I/O module. The forwarding hardware in conjunction with the lookup hardware can provide wire speed decisions on how to process ingress packets and outgoing packets for egress. In accordance with some embodiments, some aspects of the present disclosure can be performed wholly within the data plane.

### Further Examples

Features described above as well as those claimed below may be combined in various ways without departing from the scope hereof. The following examples illustrate some possible, non-limiting combinations:
(A1) A method in a first network device among a plurality of network devices, the method comprising the first network device: receiving a packet from a first host connected to the first network device; using the received packet to perform a lookup in one or more data tables in the first network device to identify an egress port that corresponds to a destination of the received packet, wherein the egress port is on another (second) network device among the plurality of network devices separate from the first network device; forwarding the received packet to the second network device, wherein the first network device transmits the received packet to a second host connected to the egress port on the second network device; subsequent to the forwarding, determining that the second network device is not reachable; in response to determining that the second network device is not reachable, updating one or more of the data tables in the first network device to indicate the second network device is not reachable; and dropping any packets received whose corresponding egress ports are on the second network device in response to one or more of the data tables in the first network device being updated to indicate the second network device is not reachable.
(A2) For the method denoted as (A1), wherein the one or more data tables in the first network device include a reachability table that associates the egress port with a validity parameter, wherein updating one or more of the data tables in the first network device includes setting the validity parameter to a first data state that indicates the second network device is not reachable, wherein packets whose corresponding egress ports are on the second network device are dropped by virtue of the validity parameters associated with the egress ports being set to the first data state.
(A3) The method denoted as any of (A1) through (A2), further comprising receiving a message from a device to which the plurality of network devices send heartbeat messages, wherein the received message indicates that the second network device is not reachable.
(A4) The method denoted as any of (A1) through (A3), further comprising the first network device periodically sending and receiving heartbeat messages to and from the plurality of network devices, wherein the second network device is deemed not reachable when the first network device does not receive a heartbeat message from the second network device within a predetermined period of time.
(A5) For the method denoted as any of (A1) through (A4), wherein the network is configured according to a spine-leaf architecture and the first network device and the second network device are leaf devices.
(A6) For the method denoted as any of (A1) through (A5), wherein the second network device is in an aggregation group, the method further comprising, in response to determining that the second network device is not reachable, removing ports on the second network device from the aggregation group.
(A7) For the method denoted as any of (A1) through (A6), wherein the aggregation group is an ECMP (Equal Cost Multipath) group.
(A8) For the method denoted as any of (A1) through (A7), wherein the aggregation group is a LAG (Link Aggregation Group) group.
(B1) A first network device comprising: one or more computer processors; a memory having stored thereon one or more data tables; and a computer-readable storage device comprising instructions for controlling the one or more computer processors to: receive a packet; identify an egress port that corresponds to a destination of the received packet, wherein the egress port is on another (second) network device among a plurality of network devices; forward the received packet to the second network device; subsequent to the forwarding, determine that the second network device is not reachable; in response to determining that the second network device is not reachable, update the one or more of the data tables to indicate the second network device is not reachable; and drop any packets received whose corresponding egress ports are on the second network device in response to one or more of the data tables in the first network device being updated to indicate the second network device is not reachable.
(B2) For the first network device denoted as (B1), wherein the one or more data tables include a reachability table that associates the egress port with a validity parameter, wherein updating the one or more of the data tables includes setting the validity parameter to a first data state that indicates the second network device is not reachable, wherein packets whose corresponding egress ports are on the second network device are dropped by virtue of the validity parameters associated with the egress ports being set to the first data state.
(B3) For the first network device denoted as any of (B1) through (B2), wherein the computer-readable storage device further comprises instructions for controlling the one or more computer processors to receive a message from a device to which the plurality of network devices send heartbeat messages, wherein the received message indicates that the second network device is not reachable.
(B4) For the first network device denoted as any of (B1) through (B3), wherein the computer-readable storage device further comprises instructions for controlling the one or more computer processors to periodically send and receive heartbeat messages to and from the plurality of network devices, wherein the second network device is deemed not reachable when the first network device does not receive a heartbeat message from the second network device within a predetermined period of time.
(B5) For the first network device denoted as any of (B1) through (B4), wherein the second network device is in an aggregation group, the method further comprising, in response to determining that the second network device not reachable, removing ports on the second network device from the aggregation group.
(B6) For the first network device denoted as any of (B1) through (B5), wherein the aggregation group is an ECMP group.
(B7) For the first network device denoted as any of (B1) through (B6), wherein the aggregation group is a LAG group.
(C1) A non-transitory computer-readable storage device in a first network device, the non-transitory computer-readable storage device having stored thereon computer executable instructions, which when executed, cause the first network device to: receive a packet; identify an egress port that corresponds to a destination of the received packet, wherein the egress port is on another (first) network device among a plurality of network devices; forward the received packet to the second network device; subsequent to the forwarding, determine that the second network device is not reachable; in response to determining that the second network device is not reachable, update a data table in the first network device to indicate the second network device is not reachable; and drop any packets received whose corresponding egress ports are on the second network device in response to the data table being updated to indicate the second network device is not reachable.
(C2) For the non-transitory computer-readable storage device denoted as (C1), wherein the data table associates the egress port with a validity parameter, wherein updating the data table includes setting the validity parameter to a first data state that indicates the second network device is not reachable, wherein packets whose corresponding egress ports are on the second network device are dropped by virtue of the validity parameters associated with the egress ports being set to the first data state.
(C3) For the non-transitory computer-readable storage device denoted as any of (C1) through (C2), wherein the second network device is in an aggregation group, the method further comprising, in response to determining that the second network device not reachable, removing ports on the second network device from the aggregation group.
(C4) For the non-transitory computer-readable storage device denoted as any of (C1) through (C3), wherein the aggregation group is an ECMP group.
(C5) For the non-transitory computer-readable storage device denoted as any of (C1) through (C4), wherein the aggregation group is a LAG group.

The above description illustrates various embodiments of the present disclosure along with examples of how aspects of the present disclosure may be implemented. The above examples and embodiments should not be deemed to be the only embodiments, and are presented to illustrate the flexibility and advantages of the present disclosure as defined by the following claims. Based on the above disclosure and the following claims, other arrangements, embodiments, implementations and equivalents may be employed without departing from the scope of the disclosure as defined by the claims.

## Claims

1. A method in a first network device among a plurality of network devices, the method comprising the first network device:
receiving a packet from a first host connected to the first network device;
using the received packet to perform a lookup in one or more data tables in the first network device to identify an egress port that corresponds to a destination of the received packet, wherein the egress port is on another (second) network device among the plurality of network devices separate from the first network device;
forwarding the received packet to the second network device, wherein the first network device transmits the received packet to a second host connected to the egress port on the second network device;
subsequent to the forwarding, determining that the second network device is not reachable;
in response to determining that the second network device is not reachable, updating one or more of the data tables in the first network device to indicate the second network device is not reachable; and
dropping any packets received whose corresponding egress ports are on the second network device in response to one or more of the data tables in the first network device being updated to indicate the second network device is not reachable.

2. The method of claim 1, wherein the one or more data tables in the first network device include a reachability table that associates the egress port with a validity parameter, wherein updating one or more of the data tables in the first network device includes setting the validity parameter to a first data state that indicates the second network device is not reachable, wherein packets whose corresponding egress ports are on the second network device are dropped by virtue of the validity parameters associated with the egress ports being set to the first data state.

3. The method of claim 1 or claim 2, further comprising receiving a message from a device to which the plurality of network devices send heartbeat messages, wherein the received message indicates that the second network device is not reachable.

4. The method of claim 1 or claim 2, further comprising the first network device periodically sending and receiving heartbeat messages to and from the plurality of network devices, wherein the second network device is deemed not reachable when the first network device does not receive a heartbeat message from the second network device within a predetermined period of time.

5. The method of any preceding claim, wherein the network is configured according to a spine-leaf architecture and the first network device and the second network device are leaf devices.

6. The method of any preceding claim, wherein the second network device is in an aggregation group, the method further comprising, in response to determining that the second network device is not reachable, removing ports on the second network device from the aggregation group.

7. The method of claim 6, wherein the aggregation group is an ECMP (Equal Cost Multipath) group.

8. The method of claim 6, wherein the aggregation group is a LAG (Link Aggregation Group) group.

9. A first network device comprising:
one or more computer processors;
a memory having stored thereon one or more data tables; and
a computer-readable storage device comprising instructions for controlling the one or more computer processors to:
receive a packet;
identify an egress port that corresponds to a destination of the received packet, wherein the egress port is on another (second) network device among a plurality of network devices;
forward the received packet to the second network device;
subsequent to the forwarding, determine that the second network device is not reachable;
in response to determining that the second network device is not reachable, update the one or more of the data tables to indicate the second network device is not reachable; and
drop any packets received whose corresponding egress ports are on the second network device in response to one or more of the data tables in the first network device being updated to indicate the second network device is not reachable.

10. The first network device of claim 9, wherein the one or more data tables include a reachability table that associates the egress port with a validity parameter, wherein updating the one or more of the data tables includes setting the validity parameter to a first data state that indicates the second network device is not reachable, wherein packets whose corresponding egress ports are on the second network device are dropped by virtue of the validity parameters associated with the egress ports being set to the first data state.

11. The first network device of claim 9 or claim 10, wherein the computer-readable storage device further comprises instructions for controlling the one or more computer processors to receive a message from a device to which the plurality of network devices send heartbeat messages, wherein the received message indicates that the second network device is not reachable.

12. The first network device of any of claims 9 to 11, wherein the computer-readable storage device further comprises instructions for controlling the one or more computer processors to periodically send and receive heartbeat messages to and from the plurality of network devices, wherein the second network device is deemed not reachable when the first network device does not receive a heartbeat message from the second network device within a predetermined period of time.

13. The first network device of any of claims 9 to 12, wherein the second network device is in an aggregation group, the method further comprising, in response to determining that the second network device not reachable, removing ports on the second network device from the aggregation group.

14. The first network device of claim 13, wherein the aggregation group is an ECMP group or a LAG group.

15. A non-transitory computer-readable storage device in a first network device, the non-transitory computer-readable storage device having stored thereon computer executable instructions, which when executed, cause the first network device to:
receive a packet;
identify an egress port that corresponds to a destination of the received packet, wherein the egress port is on another (first) network device among a plurality of network devices;
forward the received packet to the second network device;
subsequent to the forwarding, determine that the second network device is not reachable;
in response to determining that the second network device is not reachable, update a data table in the first network device to indicate the second network device is not reachable; and
drop any packets received whose corresponding egress ports are on the second network device in response to the data table being updated to indicate the second network device is not reachable.
